# EUROPEAN PATENT APPLICATION

(11) **EP 4 450 348 A1**
(43) Date of publication of application: **23.10.2024**
(21) Application number: 22907258.2
(22) Date of filing: 02.12.2022
(51) Int. Cl.: B60W 20/15, B60K 6/46, B60W 10/26, H02J 7/00, H02J 7/10, B60L 50/16, B60L 58/12, B60L 58/16, B60L 58/25, B60L 58/27, B60L 53/14, H01M 4/62, H01M 10/052, H01M 10/0562, H01M 10/615, H01M 10/625, H01M 10/633, H01M 10/651

(54) **BATTERY TEMPERATURE CONTROL METHOD AND BATTERY TEMPERATURE CONTROL DEVICE**

(30) Priority: 15.12.2021 JP 2021203322
(71) Applicant: NISSAN MOTOR CO., LTD., Kanagawa 221-0023 (JP)
(72) Inventor: YAGUCHI, Tatsuya, Atsugi-shi, Kanagawa 243-0123 (JP); IMAOKA, Yoshihiro, Atsugi-shi, Kanagawa 243-0123 (JP); MIZOJIRI, Sei, Atsugi-shi, Kanagawa 243-0123 (JP); ZHU, Xing, Atsugi-shi, Kanagawa 243-0123 (JP)
(74) Representative: Global IP Europe Patentanwaltskanzlei
(86) International application number: PCT/JP2022/044613
(87) International publication number: WO 2023/112730

(57) **Abstract**

A scheduled time by which the temperature of a battery will be within a desired temperature range is predicted, or information of the scheduled time is acquired, and if the temperature of the battery is below a desired temperature range, the temperature of the battery is raised to the desired temperature range by the scheduled time by means of repeated charge/discharge control of the battery as heating control of the battery prior to the scheduled time.

## Description

### Technical Field

The present invention relates to a battery temperature control method and battery temperature control device which control the temperature of a driving battery that is a driving source of a vehicle.

The present application claims priority based on Japanese Patent Application No. 2021-203322, filed on December 15, 2021, and for all designated states where incorporation by reference of documents is permitted, the contents of the above-mentioned application are incorporated into the present application by reference and made part of the description of the present application.

### Background Art

A power supply control system for a moving body, comprising a power storage device that is installed in the mobile body and that can be charged by external power supply equipment, a temperature adjustment unit that adjusts the temperature of the power storage device, and a temperature control unit that monitors the temperature of the power storage device and that uses the temperature adjustment unit to control the temperature of the power storage device is known from the prior art (Patent Document 1). The temperature control unit predicts the next charging time for the power storage device and the temperature of the power storage device at the next power storage time based on the installation information of the external power supply equipment in the movement path of the mobile body and the power storage state of the power storage device. The temperature control unit also adjusts the temperature of the power storage device using the temperature regulation unit prior to the next charging time based on the results of these predictions. The temperature adjustment unit is equipped, for example, with an air-cooled or water-cooled heating unit, which uses a heater or the like, and/or an air-cooled or water-cooled cooling unit, which uses a fan, a refrigeration cycle or the like.

### Prior Art Documents

### Patent Documents

Patent Document 1: Japanese Patent Publication No. 2020-13726

### Summary of the Invention

### Problem to Be Solved by the Invention

The prior art has the problem that the battery is heated using a heater with limited heating capacity, so that even if the battery is heated ahead of time, it is difficult to raise the temperature of the battery to a desired temperature range by the time that the battery needs to be heated, i.e., the next charging time.

The problem to be solved by the present invention is to provide a battery temperature control method and battery temperature control device capable of heating a battery to a desired temperature range by the time the battery needs to be heated.

### Means for Solving the Problem

The present invention solves the aforementioned problem by predicting a scheduled time by which the temperature of a battery needs to be within a desired temperature range or acquiring said scheduled time, and, if the temperature of the battery is below the desired temperature range, repeating charge/discharge control of the battery as a battery temperature control ahead of the scheduled time to raise the temperature of the battery to the desired temperature range by the scheduled time.

### Effects of the Invention

By the present invention, the battery is heated using its own produced heat, making it possible to heat the battery to a desired temperature range by the time the battery needs to be heated.

### Brief Description of the Drawings

Figure 1(A) is a schematic configuration diagram of an electric vehicle according to an embodiment.
Figure 1(B) is one example of a control block diagram showing a principal configuration of the control system of the electric vehicle shown in Figure 1(A).
Figure 2(A) and Figure 2(B) are flowcharts showing a procedure for battery temperature control according to the present embodiment.
Figure 3(A) shows the subroutine of Step S6 in Figure 2(A).
Figure 3(B) shows the subroutine of Step S25 in Figure 2(B).
Figure 4 shows diagrams for explaining the relationship between heating control of the battery performed before the start of driving and battery temperature.
Figure 5 shows diagrams for explaining the relationship between battery temperature control performed before the start of high-load operation and battery temperature.

### Modes for Embodying the Invention

Embodiments of the battery temperature control method and battery temperature control device according to the present invention are described below with reference to the drawings.

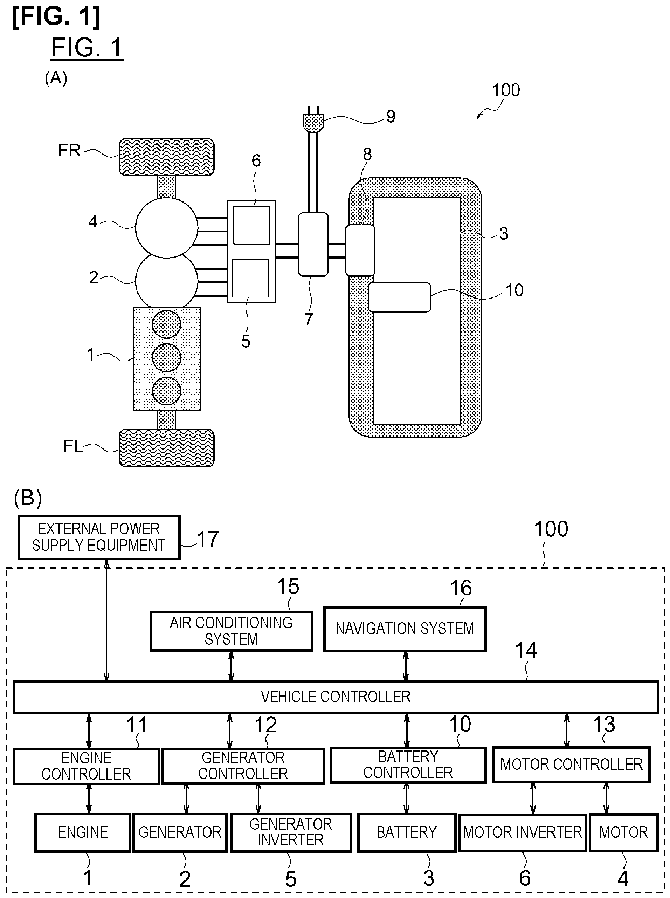

Figure 1(A) is a schematic configuration diagram of an electric vehicle 100 according to the present embodiment. In this embodiment, a so-called series hybrid vehicle, equipped with an engine 1 (internal combustion engine) serving as a power generation device, an electric power generation motor (hereinafter referred to as a generator 2), and a motor 4 that uses electric power from the generator 2 or a battery 3 to generate drive power to drive the electric vehicle 100, is described as an example of the electric vehicle 100. As shown in Figure 1(A), the electric vehicle 100 is provided with the engine 1, the generator 2, the battery 3, the motor 4, a generator inverter 5, a motor inverter 6, a power delivery module 7, a power junction box 8, a charging plug 9, and a battery controller 10. Of these, the battery controller 10, for example, may constitute a battery temperature control device according to the present embodiment of the invention.

The engine 1 is connected to the generator 2 via gears (gears) not shown in the drawings, produces the power for the generator 2 to generate electricity, and transmits this power to the generator 2 in accordance with instructions from an engine controller 11 (see Figure 1(B)), described below. In other words, the engine 1 is used as a drive source for power generation by the generator 2 in the electric vehicle 100.

The generator 2 is configured to be able to carry out cranking of the engine 1 when starting the engine 1 and motoring to turn the engine 1, in response to instructions from a generator controller 12 (see Figure 1(B)) described below.

The battery 3 is a high-voltage battery comprising lithium-ion secondary cells, for example. The battery 3 is provided with power generation elements that have a cathode that includes a cathode active material layer containing a cathode active material capable of adsorbing and releasing lithium ions, an anode that includes an anode active material layer containing an anode active material capable of adsorbing and releasing lithium ions, and an electrolyte layer that contains an electrolyte as a principal component and is interposed between the cathode active material layer and the anode active material layer.

Examples of the cathode active material include but are not limited to layered rock salt-type active materials (such as LiCoO2), spinel-type active materials (such as LiMn2O4), olivine-type active materials (such as LiFePO4), Si-containing active materials (such as Li2FeSiO4), which were known at the time the present application was filed. An example of an oxide active material other than the above is Li4Ti5O12. Composite oxides containing lithium and nickel are preferably used, with Li(Ni-Mn-Co)O2 and composite oxides in which a part of these transition metals are substituted by other elements (NMC composite oxides) being even more preferably used. As noted, NMC composite oxides include composite oxides in which a part of these transition metals are substituted by other elements. Examples of the other elements in this case include Ti, Zr, Nb, W, and P. A sulfur-based cathode electrode active material may also be used for the cathode active material. Examples of sulfur-based cathode active materials include particles or thin films of organic or inorganic sulfur compounds and may be any material that utilizes the redox reaction of sulfur to release lithium ions during charging and adsorb lithium ions during discharging. It should be noted that the cathode active materials given above are merely examples, and any material known at the time the present application was filed may be used for the cathode active material in the present embodiment.

Further, in the present embodiment, the anode active material layer contains an anode active material that has a potential at least 0.5 V higher than the equilibrium potential in the reaction between the lithium metal and the lithium ions. Examples of the anode active material include lithium titanate oxides (LTO) and niobium titanium oxides (NTO). These anode active materials may be used alone or in combinations of two or more. It should be noted that anode active materials other than those above may also be used. The anode in the present embodiment may also be a lithium metal in which the anode active material layer dissolves during discharge. For example, the battery 3 may be configured to comprise a power generating element in which an anode active material layer, an electrolyte layer, and a cathode active material layer are sequentially stacked during charging. With this configuration, lithium deposited at the anode (also known as a lithium fully plating electrode) during charging can be dissolved during discharging.

Further, in the present embodiment, the electrolyte layer may also contain a solid electrolyte as a principal component, i.e., the battery 3 may also be an all-solid-state lithium-ion secondary battery that uses a solid electrolyte. Examples of solid electrolytes include sulfide solid electrolytes and oxide solid electrolytes. An example of a sulfide solid electrolyte is a Li-P-S solid electrolyte (e.g., L17P3S1 1) known as LPS. Further, LGPS, which is represented by Li (4-x) Ge (1-x) PxS4 (where x satisfies 0 < x < 1), may be used as a sulfide solid electrolyte, for example. Examples of an oxide solid electrolyte include compounds with a NASICON structure. Examples of compounds with a NASICON structure include lithium lanthanum zirconium oxide (LLZO), compounds represented by the general formula Li1 + xAlxGe2-x (PO4) 3 (where 0 ≤ x ≤ 2) (LAGP), compounds represented by Li1 + 2xZr2-xCax (PO4) 3 (LZCP), and compounds represented by the general formula Li1 + xAlxTi2-x (PO4) 3 (where 0 ≤ x ≤ 1.2) (LATP), etc. Garnet-type solid electrolytes (e.g., Li7La3Zr2O12) known as LLZ may also be used as the oxide solid electrolyte.

It should be noted that the battery 3 is not limited to an all-solid-state lithium-ion secondary battery and may also be a lithium secondary ion battery configured using an electrode composite layer containing a solid electrolyte and an electrolyte layer using an organic electrolyte solution. For example, in the battery 3, the cathode active material layer may be configured to include a cathode composite layer in which an electrode composite material serving to ensure electrode adhesion is mixed with the cathode and layered, and may also be configured to include an anode composite layer in which an electrode composite material serving to ensure electrode adhesion is mixed with the anode and layered. The solid electrolyte materials noted above may be used for the cathode composite layer and/or the anode composite layer.

Although not shown in the drawings, a voltage sensor that is connected between the positive and anodes of the battery 3 and detects the voltage of the battery 3, a current sensor that is connected to the cathode of the battery 3 and detects the charge-discharge current of the battery 3, and a temperature sensor that detects the temperature of the battery 3 are provided around the battery 3. The voltage of the battery 3 detected by the voltage sensor, the charge/discharge current of the battery 3 detected by the current sensor, and the temperature of the battery 3 detected by the temperature sensor are output to the battery controller 10.

The motor 4 produces drive power from AC power supplied by the motor inverter 6, and the produced drive power is transmitted to drive wheels FR, FL via a reducer, which is not shown in the drawings. While the electric vehicle 100 is decelerating or coasting, for example, regenerative drive power is transmitted from the drive wheels FR, FL to the motor 4, thereby turning the motor 4. The turning of the motor 4 causes AC power to be output from the motor 4 to the motor inverter 6.

The generator inverter 5 is connected to the generator 2, the battery 3, and the motor inverter 6. The generator inverter 5 converts the AC power produced by the generator 2 into DC power in response to an instruction from the generator controller 12 and outputs the result to the battery 3 or the motor inverter 6. The generator inverter 5 converts the DC power supplied by the battery 3 into AC power in response to an instruction from the generator controller 12 and outputs the result to the generator 2.

The motor inverter 6 converts the DC power supplied by the battery 3 or the generator inverter 5 into AC power in response to an instruction from a motor controller 13 (see Figure 1(B)) discussed below and outputs the result to the motor 4. The motor inverter 6 converts the AC power supplied by the motor 4 into DC power based on an instruction from the motor controller 13. The converted DC power is output to the battery 3 via the power delivery module 7 and the battery junction box 8.

The power delivery module 7 is provided between the battery 3, on the one hand, and the generator inverter 5 and the motor inverter 6, on the other hand, and manages the charging power to the battery 3 and the discharging power from the battery 3 in response to instructions from the battery controller 10. In this embodiment, the electric vehicle 100 is configured such that the battery 3 can be charged using the external power supply equipment 17 (see Figure 1(B)) provided outside the electric vehicle 100. As shown in Figure 1(A), the power delivery module 7 is connected via a charging cable to the charging plug 9. The shape of the charging plug 9 is such that it can fit into the connector of the external power supply equipment 17, allowing the charging plug 9 to be connected to the external power supply equipment. The power delivery module 7 may include a rectifier circuit that rectifies the AC power from the external power supply equipment 17, a smoothing circuit that smooths the rectified voltage, and a DC-DC converter which converts the smoothed DC voltage into a prescribed voltage. The charging method for charging the battery 3 from the external power supply equipment 17 may use, but is not limited to, standards such as CHAdeMO (registered trademark) that perform the exchange of control signals related to charging via CAN (Controller Area Network) communication or other standards, for example. The charging cable includes a common signal line (such as a signal line for CAN communication) and a power supply line that are compatible with these standards.

The battery junction box 8 has a main relay (not shown) for conducting or interrupting the connection between the battery 3, on the one hand, and the generator inverter 5 and the motor inverter 6, on the other hand. The main relay opens or closes in response to an instruction from the battery controller 10, electrically interrupting or connecting the battery 3, on the one hand, and the generator inverter 5 and the motor inverter 6, on the other hand.

The battery controller 10 is configured as an electronic control unit comprising a computer provided with hardware and software. The computer of the battery controller 10 includes ROM (read only memory) for managing states of the battery 3, a CPU (central processing unit) that executes programs stored in the ROM, and RAM (random access memory) that functions as an accessible storage device. It should be noted that instead of or in addition to the CPU, an MPU (micro processing unit), DSP (digital signal processor), an ASIC (application specific integrated circuit), an FPGA (field programmable gate array), or the like may be used as the operating circuit.

The battery controller 10 manages the state of charge (state of charge: SOC) of the battery 3. For example, the battery controller 10 calculates as the current state of charge the state of charge corresponding to the current voltage of the battery 3 based on a map showing the interrelationships between states of charge and voltages. The battery controller 10 outputs battery information including the current state of charge to a vehicle controller 14. The battery controller 10 also executes charging control or discharging control in the battery 3 in response to an instruction from the vehicle controller 14 to drive the electric vehicle 100. In the following description, charging control and discharging control in the battery 3 are simply referred to as "charge/discharge control" for the sake of convenience. The battery controller 10 calculates the internal resistance of the battery 3 based on the temperature and state of charge of the battery 3, and calculates the input and output power capabilities of the battery 3 based on the temperature, internal resistance, state of charge, and charge/discharge power of the battery 3. The battery controller 10 outputs the input and output power capabilities of the battery 3 to the vehicle controller 14. It should be noted that in this embodiment there is no particular limitation on the method for calculating the state of charge of the battery 3, the method for controlling charging and discharging to drive the electric vehicle 100, or the method for calculating the input and output power capabilities of the battery 3 discussed above; any method known when the present application was filed may be applied to the battery controller 10.

The battery controller 10 also manages the temperature of the battery 3. The battery controller 10 activates an air-cooled or water-cooled cooling system (not shown) that uses a fan or a refrigeration cycle, etc., as cooling control for the battery 3 in response the temperature of the battery 3 or instructions from the vehicle controller 14. In this embodiment, the battery controller 10 repeatedly executes charge/discharge control of the battery 3 as the heating control of the battery 3 to heat the battery 3. When the battery 3 is charged or discharged, a charge/discharge current flows through the internal resistance of the battery 3, producing an amount of heat based on the internal resistance and the charge/discharge current. The battery controller 10 causes the battery 3 to produce heat by repeating the charge/discharge control to the battery 3 to heat the battery 3 separately from the charge/discharge control for driving the electric vehicle 100. In the following description, the charge current and the discharge current flowing through the internal resistance of the battery 3 are simply referred to as the "charge/discharge current" for the sake of convenience. A detailed description of the heating control using the battery controller 10 will be described further below.

Figure 1(B) is an example of a control block diagram showing a principal configuration of the control system in the electric vehicle 100 shown in Figure 1(A). In the block diagram shown in Figure 1(B) the same reference numerals as the reference numerals in Figure 1(A) are assigned to the same blocks as in Figure 1(A). As shown in Figure 1(B), the control system of the electric vehicle 100 includes the battery controller 10, the engine controller 11, the generator controller 12, the motor controller 13, and the vehicle controller 14. Like the battery controller 10, the engine controller 11, the generator controller 12, the motor controller 13, and the vehicle controller 14 are configured as electronic control units comprising computers provided with hardware and software. Each computer consists of a CPU as the operating circuit and RAM as the accessible storage device. Figure 1(B) also shows an air conditioning system 15 and a navigation system 16 as systems installed in the electric vehicle 100 which can communicate with the aforementioned control systems. Further, in Figure 1(B), the external power supply equipment 17 is shown as equipment that is provided outside the electric vehicle 100 and that can charge the battery 3.

The engine controller 11 adjusts the amount of air intake by the throttle actuator and the amount of fuel injection by the injectors, so that the operating point of the engine 1 (engine torque and the engine speed) approximates an engine torque command value and an engine speed command value input by the vehicle controller 14.

The generator controller 12 performs switching control to the generator inverter 5 in response to a speed detection value and voltage or other states of the generator 2, so that the generator speed matches a generator speed instruction value input by the vehicle controller 14.

The motor controller 13 performs switching control to the motor inverter 6 in response to the speed and voltage or other states of the motor 4, so that the traveling motor torque of the motor 4 realizes a motor torque command value input by the vehicle controller 14.

The air conditioning system 15 is a system that includes an air conditioner for regulating the temperature, humidity, fan speed, and air quality, etc., in the interior of the electric vehicle 100. The air conditioning system 15 of the present embodiment has a timer air conditioning function for air-conditioning the vehicle interior according to a desired schedule. When a passenger uses the display provided in the electric vehicle 100 to input the timer air conditioning settings, the timer air conditioner information input by the passenger is input into the air conditioning system 15. The timer air conditioning information includes a scheduled departure time of the electric vehicle 100, a set temperature of the air conditioner, etc. The air conditioning system 15 causes the air conditioner to operate so that the interior temperature reaches a set temperature by the scheduled departure time. The air conditioning system 15 also outputs the timer air conditioning information to the vehicle controller 14.

The navigation system 16 is provided with a Global Navigation Satellite System (GNSS) receiver, acquires the current location of the electric vehicle 100 from a positioning device that receives radio waves from a plurality of navigation satellites to determine the current location of the electric vehicle 100, and acquires map information that indicates the current location of the electric vehicle 100 from a map database (not shown). The navigation system 16 sets a travel route to a destination input by the passenger and provides route guidance to the passenger following the set travel route. The navigation system 16 predicts the travel conditions of the electric vehicle 100 during travel along the travel route based on road width, gradient, road surface conditions, etc., along the travel route of the electric vehicle 100. The travel conditions of the electric vehicle 100 include such information as the speed of the electric vehicle 100, and the gradient of the road being traversed. The navigation system 16 outputs to the vehicle controller 14 travel route information including the current location of the electric vehicle 100, the travel route, and the travel conditions. If the external power supply equipment 17 that can be used by the electric vehicle 100 is installed along the travel route, then installation information of the external power supply equipment 17 is included in the travel route information.

The external power supply equipment 17 consists of a charging station installed in a commercial or public facility along the travel route of the electric vehicle 100 and is provided with a charger (not shown) connected to a commercial power source. The external power supply equipment 17 may also be a charging power source installed in a home parking space, etc., of a user, and the charging of the battery 3 may be initiated by using the charging cable to connect the external power supply equipment 17 installed in these charging locations to a connection port on the electric vehicle 100 (a connection port with charging plug 9). Once the external power supply equipment 17 and the charging plug 9 are electrically connected, various types of charging-related information is exchanged between the external power supply equipment 17 and the vehicle controller 14 over a common signal line included in the charging cable. Examples of information output by the external power supply equipment 17 to the vehicle controller 14 include external power supply equipment 17 information of the external power supply equipment 17 including rated output current and output power, and information such as how long it will take for the battery 3 to become fully charged, as calculated by the external power supply equipment 17. It should be noted that there is no particular limitation on the charging method of the external power supply equipment 17 in the present embodiment, which may be normal charging or fast charging. As will be explained below, in the present embodiment, the battery 3 is repeatedly charged and discharged in the heating control of the battery 3 when the external power supply equipment 17 and the electric vehicle 100 are connected, so that the external power supply equipment 17 is preferably provided with a charger/discharger that allows both charging and discharging, rather than just a charger. An example of this external power supply equipment 17 is V2H (vehicle to home) charging equipment.

The vehicle controller 14 computes the motor torque command value in the motor speed for the motor 4 based on the speed of the electric vehicle 100 detected by the vehicle speed sensor (not shown) and the throttle aperture corresponding to the degree of operation of the accelerator pedal by the driver detected by an accelerator pedal sensor (not shown). The vehicle controller 14 outputs the computed motor torque command value to the motor controller 13.

The vehicle controller 14 computes the output power of the motor 4 based on the speed and voltage of the motor 4 and the motor torque command value. The vehicle controller 14 computes the power generated using the engine 1 as well as target power generation based on the output power of the motor 4 and the state of charge of the battery 3. The vehicle controller 14 also computes the engine torque command value and the engine speed command value of the engine 1 based on the state of charge and acoustic performance of the battery 3 and the efficiency of the engine 1 while meeting the computed target power generation. The vehicle controller 14 outputs the engine torque command value and the engine speed command value that have been computed to the engine controller 11. The vehicle controller 14 computes a generator speed command value corresponding to the engine speed command value and outputs the computed generator speed command value to the generator controller 12.

In the present embodiment, the vehicle controller 14 predicts a scheduled time by which the temperature of the battery 3 will be within a desired temperature range. Upon predicting the scheduled time at which the temperature of the battery 3 will be within the desired temperature range, the vehicle controller 14 outputs information of the predicted scheduled time to the battery controller 10. The present embodiment is described using as examples of scheduled times a scheduled time when the electric vehicle 100 is to start traveling (hereinafter referred to as the scheduled travel start time), and a scheduled time at which the power output of the battery 3 will be at least a prescribed power in order for the electric vehicle 100 to travel (hereinafter referred to as the scheduled high-load operation start time). The desired temperature range will be explained further below.

The vehicle controller 14 predicts the scheduled travel start time of the electric vehicle 100 based on the timer air conditioning information input by the air conditioning system 15. For example, the vehicle controller 14 predicts the scheduled departure time included in the timer air conditioning information as the scheduled travel start time of the electric vehicle 100. The vehicle controller 14 also predicts the scheduled travel start time of the electric vehicle 100 based on the required time to full charge input by the external power supply equipment 17. For example, the vehicle controller 14 predicts a time equal to the current time plus the required time to full charge as the scheduled travel start time of the electric vehicle 100.

The vehicle controller 14 also predicts the scheduled high-load operation start time of the electric vehicle 100 based on the travel route information input by the navigation system 16. For example, the vehicle controller 14 predicts whether the electric vehicle 100 will travel through locations where the power output of the motor 4 will be greater than a reference power output (hereinafter referred to as high-load operation start locations), such as mountain roads, expressway entrances, expressway merge points, and the like based on the current location, travel route, and travel route information of the electric vehicle 100 included in the travel route information. Upon predicting that the electric vehicle 100 will travel through a high-load operation start location, the vehicle controller 14 predicts the time at which the electrical vehicle 100 will pass through that location as the scheduled high-load operation start time. It should be noted that the reference drive power is a drive power set based on the drive power of the motor 4 when the electric vehicle 100 is traversing a flat area.

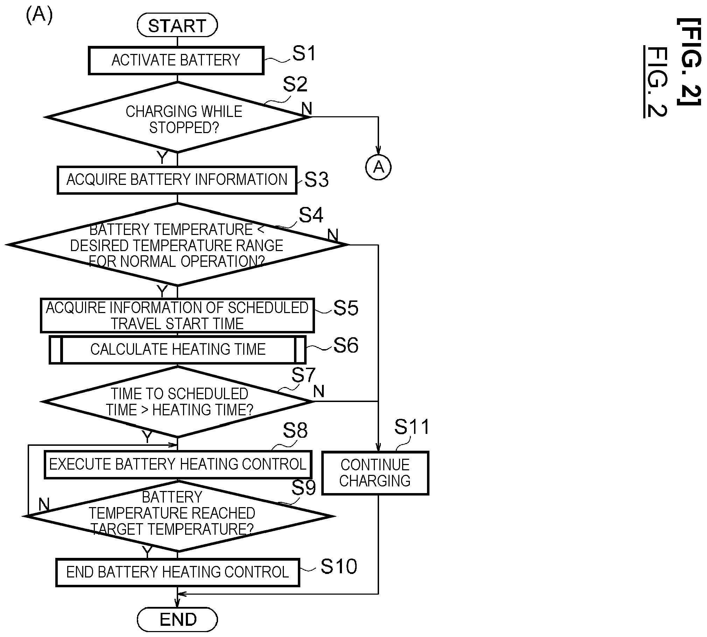

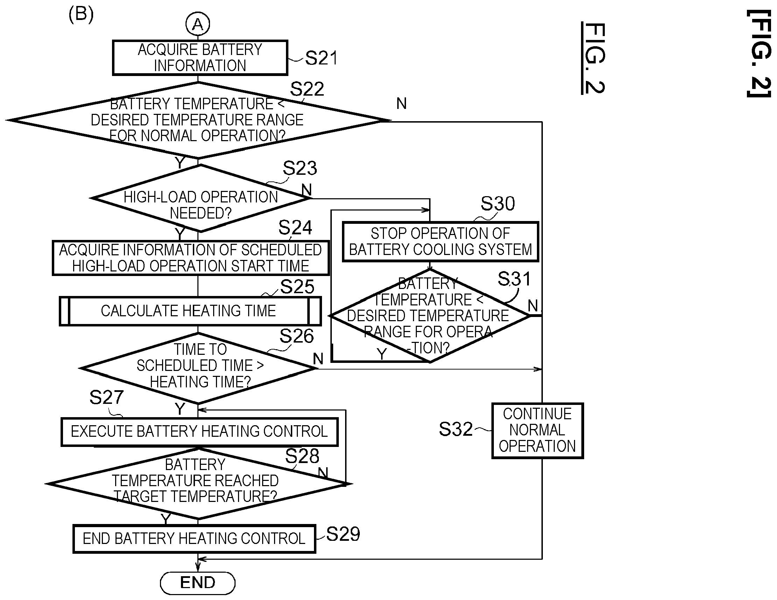

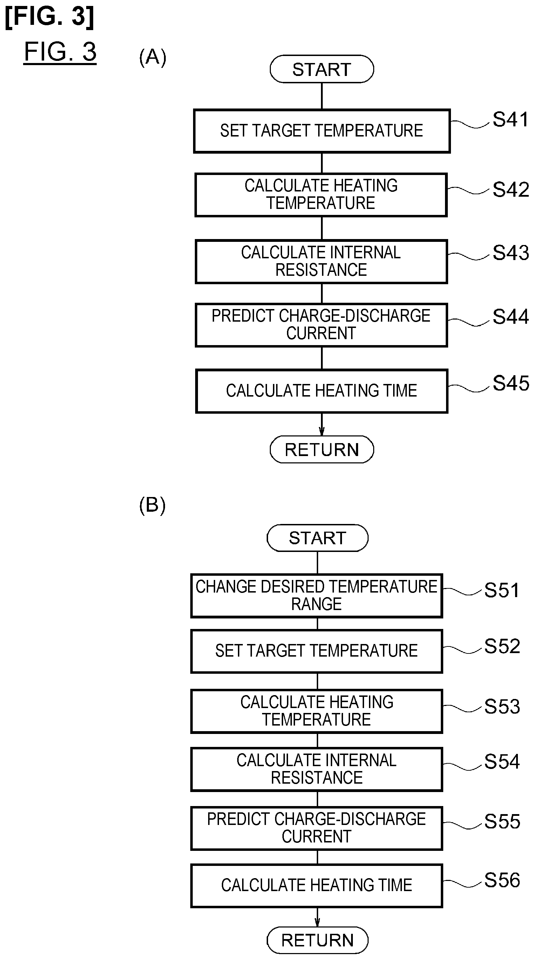

A temperature control method of the battery 3 carried out by the battery controller 10 will now be described with reference to Figures 2 and 3. Figures 2(A) and 2(B) are flowcharts showing battery temperature control procedures according to the present embodiment. Figure 3(A) shows the subroutine of Step S6 in Figure 2(A), and Figure 3(B) shows the subroutine of Step S25 in Figure 2(B). The processes shown in the flowcharts of Figures 2(A) and 2(B) are executed by the battery controller 10.

In Step S 1, the battery controller 10 start the battery 3. In Step S2, the battery controller 10 determines whether the battery 3 is being charged while the electric vehicle 100 is stopped. For example, the battery controller 10 determines that the battery 3 is charging if external power supply equipment information of the external power supply equipment 17 has been acquired from the vehicle controller 14. If the determination by the battery controller 10 is positive, the process proceeds to Step S3, but if the determination is negative, the process proceeds to Step S21 shown in Figure 2(B).

In Step S3, the battery controller 10 acquires battery information pertaining to the battery 3. The battery information includes at least a current temperature (T_{c}) of the battery 3 detected by the temperature sensor, and heat capacity (C) of the battery 3. The heat capacity of the battery 3 is the heat capacity (units: joules [J]/kelvin [K]) required to raise the temperature of the battery 3 1°C. The heat capacity of the battery 3 is stored ahead of time as a known value in the ROM or another storage device, for example.

In Step S4, the battery controller 10 compares the current temperature (T_{c}) of the battery 3 acquired in Step S3 with the desired temperature range for normal operation and determines whether the current temperature of the battery 3 is below the desired temperature range for normal operation. When a lithium-ion secondary battery is used as the battery 3, as in the present embodiment, the charging capacity of the battery 3 maybe degraded by charging under high temperature conditions, entailing the risk of reducing the service life of the battery 3. Moreover, in general, the lower the temperature of the lithium-ion secondary battery and the higher the charging current, the easier it is to deposit the lithium. For this reason, the charging current is significantly limited in a low-temperature environment. The desired temperature range for normal operation is a temperature range that has been set based on the temperature characteristics of this type of lithium-ion secondary battery, with a temperature where the charging current is at or above a desired reference current value being set as the lower temperature limit, and the highest temperature in the range of temperatures where degradation of the battery 3 can be prevented being set as the upper temperature limit, for example. The desired temperature range for normal operation is stored ahead of time as known values in the ROM or other storage device, for example. If the determination by the battery controller 10 is positive, the process proceeds to Step S5, but if the determination is negative, the process proceeds to Step S11.

In Step S5, the battery controller 10 acquires information pertaining to the scheduled travel start time (Tₛ₁) of the electric vehicle 100 from the vehicle controller 14, for example. The scheduled travel start time is a time equal to the current time (t_{c}) plus the full charge time required for the battery 3 to reach full charge using the external power supply equipment 17. When the processing in Step S5 is completed, the process proceeds to Step S6. Upon moving to Step S6, the process proceeds to Step S41, which is the subroutine shown in Figure 3(A) in which the time required to heat the battery 3 to the desired temperature range for normal operation (the heating time) is calculated.

In Step S41, the battery controller 10 sets a target temperature (Tₜ₁) of the battery 3. There is no particular limitation on the target temperature of the battery 3 in this step, as long as the target temperature is within the desired temperature range for normal operation. For example, the battery controller 10 sets the lower temperature limit within the desired temperature range for normal operation as the target temperature of the battery 3.

In Step S42, the battery controller 10 finds the temperature difference between the target temperature (Tₜ₁) set in Step S41 and the current temperature (T_{c}) of the battery 3 acquired in Step S3 to calculate the heating temperature of the battery 3 (ΔT₁ = Tₜ₁ - T_{c}).

In Step S43, the battery controller 10 calculates the internal resistance (R) of the battery 3 based on the current temperature (T_{c}) of the battery 3 and the current state of charge (SOC) of the battery 3. For example, the battery controller 10 calculates the internal resistance corresponding to the current temperature of the battery 3 based on a map showing the interrelationship between temperature and state of charge (R = f (SOC, T_{c})). It should be noted that it is assumed that the battery controller 10 calculates the state of charge of the battery 3 ahead of time from the voltage of the battery 3, but there is no particular limitation as to when the state of charge is calculated as long as it is performed before the internal resistance is calculated, so that the state of charge of the battery 3 may be calculated in any of the steps described thus far.

In Step S44, the battery controller 10 predicts the charge/discharge current flowing through the internal resistance of the battery 3 while repeatedly carrying out charge/discharge control of the battery 3 as the heating control for the battery 3. In this embodiment, the battery controller 10 calculates the minimum charge/discharge current of the battery 3 and predicts the time-average current per prescribed unit of time of the minimum charge/discharge current as the charge/discharge current flowing through the internal resistance while the heating control is being executed. The minimum charge/discharge current is a current which is smaller than the limit value of the charge/discharge current of the battery 3 determined by at least either the constraints of the electric vehicle 100 or the constraints of the environment in which the electric vehicle 100 happens to be (corresponds to "first through third limit values" of the present invention). In Step S44, the charge/discharge current of the battery 3 determined by the constraints of the electric vehicle 100 is a charge/discharge current (I_{batt}) based on the chargeable/dischargeable power of the battery 3. The charge/discharge current of the battery 3, which is determined by the constraints of the environment in which the electrical vehicle 100 happens to be, is a charge/discharge current (I_{ch}) based on the input/output characteristics of the external power supply equipment 17 and a maximum charge/discharge current (Iₙ) based on the noise characteristics of the engine 1.

In Step S44, the battery controller 10 selects as the minimum charge/discharge current (Iₘᵢₙ₁ = Min (I_{ch}, I_{bat}, Iₙ) whichever is smallest of the following: the charge/discharge current (I_{ch}) based on the input/output characteristics of the external power supply equipment 17, the charge/discharge current (I_{batt}) based on the chargeable/dischargeable power of the battery 3, or the charge/discharge current (Iₙ) based on the noise characteristics of the engine 1. The battery controller 10 then calculates the time from the current time to the scheduled travel start time (Tai = tₛ₁ - t_{c}) and predicts the time-average current (Iₐᵥₑ₁ = ∫|Iₘᵢₙ₁|dt/T_{d1}), which is the time average of the minimum charge/discharge current as the charge/discharge current for heating the battery 3. By calculating the time-average current using the absolute value of the charge/discharge current, the time average current is made to reflect the charge current or the discharge current, whichever has the greater current value.

The charge/discharge current based on the input/output characteristics of the external power supply equipment 17 is either the charge current assumed to flow to the battery 3 when the charger/discharger of the external power supply equipment 17 outputs the rated output current, or the discharge current assumed to flow to the battery 3 when the maximum input current is input into the charger/discharger of the external power supply equipment 17, whichever has the greater current value. The charge/discharge current based on the chargeable/dischargeable power of the battery 3 is either the charge current assumed to flow to the battery 3 when the maximum chargeable power is input to the battery 3 or the discharge current assumed to flow to the battery 3 when the battery 3 outputs the maximum dischargeable power, whichever has the higher current value. The charge/discharge current based on the noise characteristics of the engine 1 is the charge/discharge current assumed to flow through the battery 3 when power is supplied from the generator 2 to the battery 3 by operation of the engine 1, the noise requirements of which meet specific requirements. The specific requirements are requirements that satisfy quietness of engine sound and are predetermined.

Thus, in the present embodiment, in Step S44, the battery controller 10 predicts the charge/discharge current when carrying out heating control of the battery 3 during charging so as to meet all of the constraints of the electric vehicle 100 (including constraints pertaining to the permitted input/output of the battery 3), and constraints of the environment in which the electric vehicle 100 happens to be (including constraints pertaining to the permitted input/output of the external power supply equipment 17 and constraints pertaining to the noise of the engine 1).

In Step S45, the battery controller 10 calculates a heating time (J₁ = C × ΔT₁/Iₐᵥₑ₁² × R) for the temperature of the battery 3 to reach the target temperature set in Step S41 based on the heating temperature (ΔT₁) calculated in Step S42, the heat capacity (C) of the battery 3 acquired in Step S3, the internal resistance (R) calculated in Step S43, and the charge/discharge current (Iₐᵥₑ₁) predicted in Step S44. When the processing in Step S45 is completed, the process exits the subroutine shown in Figure 3(A) and moves to Step S7 shown in Figure 2(A).

In Step S7, the battery controller 10 compares the amount of time from the current time to the scheduled travel start time and the heating time calculated in Step S6 to determine whether the time until the scheduled travel start time is longer than the heating time. If the determination by the battery controller 10 is positive, the process proceeds to Step S8, but if the determination is negative, the step moves to Step S11. It should be noted that in this step, the battery controller 10 may also calculate the scheduled start time for the heating control if the determination is positive and execute a standby process to wait until the calculated scheduled start time without moving to Step S8. For example, the battery controller 10 calculates a time equal to the scheduled travel start time minus the heating time as the scheduled start time for the heating control.

In Step S8, the battery controller 10 carries out the heating control on the battery 3. Specifically, the battery controller 10 repeatedly carries out charging control and discharging control so that the charge/discharge current predicted in Step S44 in Figure 3(A) flows through the internal resistance of the battery 3. Further, in the present embodiment, the period during which charging control and the discharging control are executed is the same. Moreover, the period during which charging control and the discharging control are repeated is not particularly limited.

In Step S9, the battery controller 10 compares the temperature of the battery 3 detected by the temperature sensor and the target temperature (Tₜ₁) set in Step S41 to determine whether the temperature of the battery 3 has reached the target temperature. If the determination by the battery controller 10 is positive, the process proceeds to Step S 10, but if the determination is negative, the process returns to Step S8 in which the battery controller 10 carries out the heating control of the battery 3 until the determination in Step S9 is positive.

In Step S10, the battery controller 10 stops the charge/discharge control of the battery 3 executed in Step S8 and terminates the heating control of the battery. When the process in Step S10 is completed, the heating control of the battery 3 shown in Figure 2(A) finishes.

On the other hand, if the determination in Step S4 was negative, or the determination in Step S7 was negative, the process proceeds to Step S 11. In Step S 11, the battery controller 10 continues charging the battery 3 using the external power supply equipment 17 without carrying out the heating control of the battery 3. If the determination in Step S4 was negative, the temperature of the battery 3 is within the desired temperature range for normal operation, so that the heating control of the battery 3 is not required. If the determination in Step S7 was negative, the battery 3 cannot be heated to the desired temperature range for normal driving by the scheduled travel start time even if heating control of the battery 3 is carried out, so that heating control of the battery 3 is not required. When the process in Step S11 is completed, the heating control of the battery 3 shown in Figure 2(A) is terminated.

The heating control of the battery 3 when the electric vehicle 100 is traveling will now be described with reference to Figure 2(B). If the determination in Step S2 in Figure 2(A) was negative, the process proceeds to Step S21 in Figure 2(B).

In Step S21, the battery controller 10 acquires the information pertaining to the battery 3. In Step S22, the battery controller 10 compares the current temperature (T_{c}) of the battery 3 acquired in Step S21 with the desired temperature range for normal operation to determine whether the current temperature of the battery 3 is below the desired temperature range for normal operation. Step S21 corresponds to Step S3 in Figure 2(A) and Step S22 corresponds to Step S4 in Figure 2(A); these steps have already been described. In Step S22, if the determination by the battery controller 10 is positive, the process proceeds to Step S23, but if the determination is negative, the process proceeds to Step S32.

In Step S23, the battery controller 10 determines whether the electric vehicle 100 requires high-load operation. For example, the battery controller 10 acquires the travel route information from the vehicle controller 14 and determines whether the electric vehicle 100 will be traveling through a high-load operation start location for a prescribed amount of time starting from the present time. The battery controller 10 determines that the electric vehicle 100 will require high-load operation if the travel route includes a high-load operation start location, and determines that the electric vehicle 100 will not need high-load operation if the travel route does not include high-load operation start locations. If the determination by the battery controller 10 is positive, the process proceeds to Step S24, but if the determination is negative, the process proceeds to Step S30. In Steps S21-S23, the electric vehicle 100 is assumed to be traveling through locations allowing travel in normal operation, with the drive power of the motor 4 being lower than the reference drive power.

In Step S24, the battery controller 10 acquires information pertaining to the scheduled high-load operation start time (tₛ₂) of the electric vehicle 100 from the vehicle controller 14. The scheduled high-load operation start time is, for example, a scheduled time when the electric vehicle 100 will pass through a high-load operation start location. When the process in Step S24 is completed, the process proceeds to Step S25. In Step S25, the process proceeds to Step S51 in the subroutine shown in Figure 3(B), in which the time required to heat the battery 3 to the desired temperature range in high-load operation (the heating time) is calculated.

In Step S51, the battery controller 10 changes the desired temperature range from the desired temperature range for normal operation to a desired temperature range for high-load operation before the scheduled high-load operation start time. The desired temperature range for high-load operation is a temperature range higher than the desired temperature range for normal operation, with the highest temperature in the temperature range where degradation of the battery 3 can be minimized being set as the lower temperature limit, and the highest temperature in the temperature range allowing degradation of the battery 3 up to a prescribed level being set as the upper temperature limit, for example. In other words, in this step, the battery controller 10 sets a temperature range which is higher than the desired temperature range for normal operation as the desired temperature range for high-load operation. It should be noted that he prescribed level at which degradation of the battery 3 is permitted is an experimentally determined value that is set in advance.

In Step S52, the battery controller 10 sets the target temperature (Tₜ₂) of the battery 3. There is no particular limitation on the target temperature of the battery 3 in this step, as long as it is within the desired temperature range for high-load operation. For example, the battery controller 10 sets the lower temperature limit of the desired temperature range for high-load operation as the target temperature of the battery 3.

In Step S53, the battery controller 10 finds the temperature difference between the target temperature (Tₜ₂) set in Step S52 and the current temperature (T_{c}) of the battery 3 acquired in Step S21 to calculate the heating temperature of the battery 3 (ΔT₂ = Tₜ₂ - T_{c}).

In Step S54, the battery controller 10 calculates the internal resistance (R) of the battery 3 based on the current temperature (T_{c}) of the battery 3 and the current state of charge (SOC) of the battery 3. Step S54 corresponds to Step S43 in Figure 3(A), which has already been described.

In Step S55, the battery controller 10 predicts the charge/discharge current flowing through the internal resistance of the battery 3 while repeatedly executing the charge/discharge control of the battery 3 as the heating control of the battery 3. Step S55 corresponds to Step S44 in Figure 3(A). In Step S55, the charge/discharge current of the battery 3 determined by the constraints of the electric vehicle 100 is the charge/discharge current (Iᵣᵤₙ) based on the output power required for running the electric vehicle 100, the charge/discharge current (I_{eng}) based on the maximum output of the engine 1, and the charge/discharge current (I_{batt}) based on the chargeable/dischargeable power of the battery 3. The charge/discharge current of the battery 3, which is determined based on the constraints of the environment in which the electric vehicle 100 happens to be, is the maximum charge/discharge current (Iₙ) based on the noise characteristics of the engine 1.

In Step S55, the battery controller 10 selects whichever is the smallest of the charge/discharge current (Iᵣᵤₙ) based on the output power required to run the electric vehicle 100, the charge/discharge current (I_{eng}) based on the maximum output of the engine 1, the charge/discharge current (I_{batt}) based on the chargeable/dischargeable power of the battery 3, and the charge/discharge current (Iₙ) based on the noise characteristics of the engine 1 as the minimum discharge current (Iₘᵢₙ₂ = Min (Iᵣᵤₙ, I_{eng}, I_{bat}, Iₙ)). The battery controller 10 then calculates the time from the current time to the scheduled high-load operation start time (T_{d2} = tₛ₂ - t_{c}) and predicts the time-average current (Iₐᵥₑ₂ = ∫|Iₘᵢₙ₂|dt/T_{d2}), which is the time average of the minimum charge/discharge current as the charge/discharge current for heating the battery 3.

The charge/discharge current based on the output power required to run the electric vehicle 100 is the discharge current required by the battery 3 in order to drive the motor 4 and cause the electric vehicle 100 to travel. The charge/discharge current based on the maximum output of the engine 1 is the charge/discharge current assumed to flow to the battery 3 when the engine 1, operating at maximum output, causes the generator 2 to output power to the battery 3. The charge/discharge current based on the chargeable/dischargeable power of the battery 3 and the charge/discharge current based on the noise characteristics of the engine 1 were described in Step S44 in Figure 3(A).

Thus, in the present embodiment, in Step S55, the battery controller 10 predicts the charge/discharge current when executing the heating control of the battery 3 as the battery is being charged so as to meet all of the constraints of the electric vehicle 100 (including constraints pertaining to travel of the electric vehicle 100, constraints pertaining to the maximum output of the engine 1, and constraints pertaining to the permitted input/output of the battery 3) and constraints of the environment in which the electric vehicle 100 happens to be (including constraints pertaining to noise by the engine 1).

In Step S56, the battery controller 10 calculates the heating time (J₂ = C × ΔT₂/ Iₐᵥₑ₂² × R) for the temperature of the battery 3 to reach the target temperature (Tₜ₂) set in Step S52 based on the heating temperature (ΔT2) calculated in Step S53, the heat capacity (C) of the battery 3 acquired in Step S21, the internal resistance (R) calculated in Step S54, and the charge/discharge current (Iₐᵥₑ₂) predicted in Step S55. When the process in Step S56is completed, the process leaves the subroutine in Figure 3(B) and moves to Step S26 in Figure 2(B).

In Step S26, the battery controller 10 compares the time from the current time to the scheduled high-load operation start time and the heating time calculated in Step S25 to determine whether the time until the scheduled high-load operation start time is longer than the heating time. If the determination by the battery controller 10 is positive, the process proceeds to Step S27, but if the determination is negative, the process proceeds to Step S32. In this step, if the determination is positive, the battery controller 10 may also calculate the scheduled start time for the heating control and execute a standby process to wait until the calculated scheduled start time without moving to Step S27. For example, the battery controller 10 calculates a time equal to the scheduled high-load operation start time minus the heating time as the scheduled start time for the heating control.

In Step S27, the battery controller 10 performs heating control on the battery 3. Specifically, the battery controller 10 repeatedly executes charge control and discharge control so that the charge/discharge current predicted in Step S55 in Figure 3(B) flows through the internal resistance of the battery 3. The duration of charge control and discharge control and the repeating period of charge control and discharge control have been described in Step S8.

In Step S28, the battery controller 10 compares the current temperature of the battery 3 detected by the temperature sensor and the target temperature (Tₜ₂) set in Step S52 to determine whether the temperature of the battery 3 has reached the target temperature. If the determination by the battery controller 10 is positive, the process proceeds to Step S29, but if the determination is negative, the process returns to Step S27 in which the battery controller 10 carries out heating control of the battery 3 until the determination in Step S28 is positive.

In Step S29, the battery controller 10 stops the charge/discharge control of the battery 3 executed in Step S27 and terminates the heating control of the battery. Once the process and Step S29 is completed, the temperature control of the battery 3 in Figure 2(B) ends.

On the other hand, if the determination in Step S23 was negative, the process proceeds to Step S30. In Step S30, the battery controller 10 stops the operation of the battery cooling system. Although there is no need for high-load operation, the temperature of the battery 3 is below the desired temperature range for normal operation; thus, the operation of the battery cooling system is stopped and the temperature of the battery 3 is raised by the charging and discharging of the battery used to run the electric vehicle 100.

In Step S31, the battery controller 10 compares the current temperature of the battery 3 detected by the temperature sensor and the desired temperature range for normal operation to determine whether the temperature of the battery 3 is below the desired temperature range for normal operation. If the determination by the battery controller 10 is positive, the process returns to Step S30 and the battery controller 10 continues to suspend the operation of the cooling system until the determination in Step S31 is negative.

If the determination in Step S26 was negative, or if the determination in Step S31 was negative, the process proceeds to Step S32. In Step S32, the battery controller 10 continues normal operation of the electric vehicle 100 without carrying out heating control of the battery 3. If the process has moved from Step S31 to Step S32, operation of the cooling system was stopped in Step S30, so that the battery controller 10 cancels the suspension of the operation of the cooling system. If the determination in Step S26 was negative, the battery 3 cannot be heated to the desired temperature range for high-load operation by the scheduled high-load operation start time even if heating control of the battery 3 is carried out, so that heating control of the battery 3 is unnecessary. If the determination in Step S31 was negative, the electric vehicle 100 does not require high-load operation, and the temperature of the battery 3 is in the desired temperature range for normal operation, so that, again, heating control of the battery 3 is unnecessary . When the process in Step S32 comes to an end, the temperature control of the battery 3 shown in Figure 2(B)is terminated.

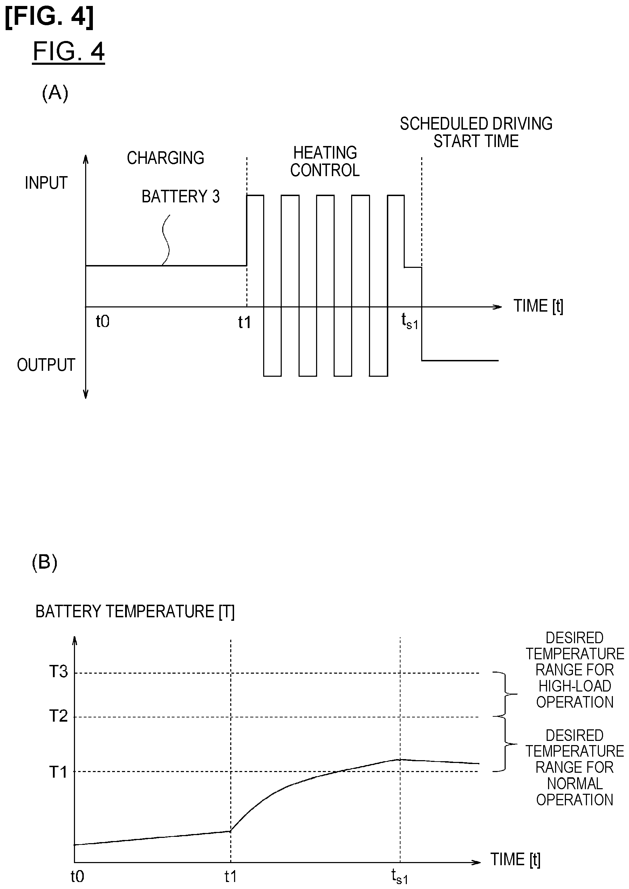

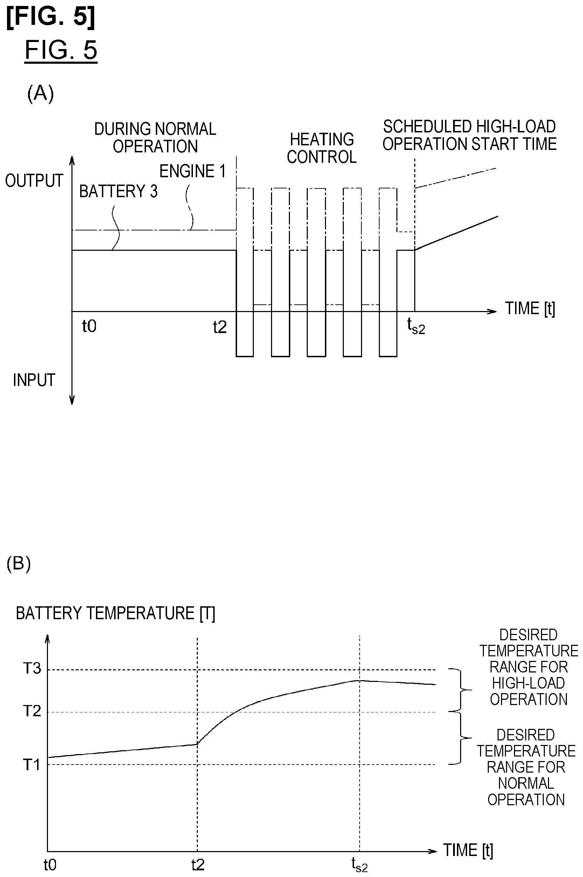

A temperature control method for the battery 3 shown in Figures 2 and 3 will now be described from the standpoint of the relationship between inputs/outputs of the battery 3 and the temperature of the battery 3 with reference to Figures 4 and 5. Figure 4 shows diagrams for explaining the relationship between battery temperature and heating control of the battery 3 performed before the start of travel and the temperature of the battery 3. Figure 4(A) is a diagram showing the input and output of the battery 3 versus time. In Figure 4(A), the vertical axis represents the input and output of the battery 3, and the horizontal axis represents time. In Figure 4(A), the amount of charge (charge power or charge current) to battery 3 increases towards the input side of the vertical axis, and the amount of discharge (discharge power or discharge current) from battery 3 increases towards the output side of the vertical axis. Figure 4(B) is a diagram showing the temperature of the battery 3 versus time. In Figure 4(B), the vertical axis represents the temperature (T) of the battery 3, and the horizontal axis represents time (t). In Figures 4(A) and 4(B), the horizontal axes are time axes common to both figures.

As shown in Figure 4, at time t₀, the battery 3 is being charged by the external power supply equipment 17, and the temperature of the battery 3 is below the desired temperature range for normal operation (lower temperature limit T1 to upper temperature limit T2). In this case, if the battery controller 10 executes the temperature control method shown in Figure 2(A), heating control by the battery controller 10 will start at time t₁, which is before the scheduled travel start time tₛ₁, and the battery 3 will repeatedly carry out charging and discharging between time t₁ and the scheduled travel start time tₛ₁. The charge/discharge current flowing through the battery 3 due to the heating control exceeds the charge/discharge current flowing through the battery 3 due to the power supplied by the external power supply equipment 17, so that the rate of temperature increase of the battery 3 during execution of the heating control exceeds the rate of temperature increase of the battery 3 during charging. Therefore, from time t₁ to the scheduled travel start time tₛ₁, the battery 3 is heated by its own heat production in the direction of the target temperature, which is within the desired temperature range for normal operation. The temperature of the battery 3 reaches the desired temperature range for normal operation by the scheduled travel start time tₛ₁, and the electric vehicle 100 can begin travel with the temperature of the battery 3 in the desired temperature range for normal operation.

Figure 5 shows diagrams for explaining the relationship between heating control of the battery 3 performed before the start of high-load operation and the temperature of the battery 3. Figure 5(A) is a diagram showing the input and output of the battery 3 versus time, and Figure 5(B) is a diagram showing the temperature of the battery 3 versus time. The vertical and horizontal axes in Figures 5(A) and 5(B) are the same as the vertical and horizontal axes in Figures 4(A) and (B), and their descriptions were given above. For the sake of convenience, the orientation of input and output on the vertical axis in Figure 5(A) is the opposite of that of the vertical axis in Figure 4(A). Further, in Figure 5(A), the input and output of the engine 1 is shown as a dotted line for reference. The relationship between input and output of the engine 1 is shown using the vertical axis representing the input and output of the battery 3. The further toward the output side of the vertical axis, the greater the drive power of the engine 1 and the greater the amount of power by the generator 2.

As shown in Figure 5, when the electric vehicle 100 is traveling in normal operation at time t₀, the battery 3 is discharging a prescribed amount of power to drive the motor 4 or the engine 1 is generating a prescribed amount of drive power that is output to the generator 2. As the electric vehicle 100 travels, the temperature of the battery 3 increases, so that the temperature of the battery 3 is within the desired temperature range for normal operation but is below the desired temperature range for high-load operation (lower temperature limit T2 to upper temperature limit T3) (the temperature of the battery 3 is assumed to have been below the desired temperature range for normal operation before time t₀). If the battery controller 10 executes the temperature control method shown in Figure 2(B) in this scenario, the temperature control by the battery controller 10 will start at time t₂, which is before the scheduled high-load operation start time tₛ₂, and the battery 3 will repeatedly carry out charging and discharging between time t₂ and the scheduled high-load operation start time tₛ₂. Since the charge/discharge current flowing through the battery 3 for the heating control is greater than the charge/discharge current flowing through the battery 3 for causing the electric vehicle 100 to travel, the rate of temperature increase of the battery 3 during heating control exceeds the rate of temperature increase of the battery 3 during normal operation. As a result, from time t₂ to the scheduled high-load operation start time tₛ₂, the battery 3 temperature rises in the direction of the target temperature, which is within the desired temperature range for high-load operation. The temperature of the battery 3 thus reaches the desired temperature range for high-load operation by the scheduled high-load operation start time tₛ₂, allowing the electric vehicle 100 to travel on mountain roads, expressway entry lanes, expressway merge points, and the like with the temperature of the battery 3 in the desired temperature range for high-load operation. Further, because the battery 3 is repeatedly carrying out charging and discharging between time t₂ and the scheduled high-load operation start time tₛ₂, the vehicle controller 14 changes the control of the engine 1 to match the heating control of the battery 3 so as to avoid affecting travel of the electric vehicle 100 during this period of time. For example, as shown in Figure 5(A), the vehicle controller 14 does not cause the battery 3 to supply power to the motor 4 while charging control of the battery 3 is being executed, and therefore controls the engine 1 to increase the amount of power generated by the generator 2. The vehicle controller 14 does cause the battery 3 to supply power to the motor 4 while discharge control of the battery 3 is being executed, however, and therefore controls the engine 1 to reduce the amount of power generated by the generator 2. It should be noted that the input/output characteristics of the engine 1 during heating control shown in Figure 5(A) are merely an example and not limiting.

Thus, the battery temperature control method according to the present embodiment is a battery temperature control method in which the battery controller 10 executes temperature control of the battery 3 installed in the electric vehicle 100, wherein the battery controller 10 acquires battery information including the temperature of the battery 3, acquires information pertaining to a scheduled time at which the temperature of the battery 3 will be within a desired temperature range, and, if the temperature of the battery 3 is below the desired temperature range, repeats charge/discharge control of the battery 3 as heating control of the battery 3 prior to the scheduled time to raise the temperature of the battery 3 to the desired temperature range by the scheduled time. The battery 3 produces heat internally due to the repeated charging and discharging. The heating efficiency of the battery 3 using its own produced heat is thought to be greater than the heating efficiency in relation to heating using a heating device such as a heater. Therefore, with the battery temperature control method and temperature control device according to the present embodiment, the battery 3 can be heated more efficiently than when a heating device is used for heating, and the battery 3 can be heated to a desired temperature range by the time by which the battery 3 needs to be heated. And since there is no need to dispose a heating device such as a heater around the battery 3, the design of the layout around the battery 3 can be made more efficient and costs can be reduced due to the decreased parts count. Further, since the battery is heated to the desired temperature range by the scheduled time, the amount of power the battery 3 is able to input and output by the scheduled start travel start time or the high-load operation start time of the electric vehicle 100 increases, making it possible to increase the efficiency of the battery 3 .

Further in the present embodiment, the battery controller 10 executes heating control prior to the scheduled time if the current temperature of the battery 3 is below the desired temperature range. The battery 3 can be heated prior to the scheduled time.

Further, in the present embodiment, information pertaining to the scheduled time acquired by the battery controller 10 is the scheduled travel start time (tₛ₁) of the electric vehicle 100 and the scheduled high-load operation start time (tₛ₂) of the electric vehicle 100. The amount of power the battery 3 is able to input and output when the electric vehicle 100 starts traveling or starts high-load operation increases, making it possible to increase the efficiency of the battery 3.

Further, in the present embodiment, the battery information acquired by the battery controller 10 includes the current temperature (T_{c}) of the battery 3 and the heat capacity (C) of the battery 3, so that the battery controller 10 determines the difference between the target temperature, which is in the desired temperature range, and the current temperature of the battery 3 to calculate the heating temperature (ΔT₁, ΔT₂), calculates the internal resistance (R) of the battery 3 based on the current temperature (T_{c}) of the battery 3 and the state of charge (SOC) of the battery 3, predicts the charge/discharge current (Iₐᵥₑ₁, Iₐᵥₑ₂) flowing through the internal resistance during execution of heating control, and calculates the heating time (J₁, J₂) for the temperature of the battery 3 to reach the target temperature (Tₜ₁, Tₜ₂). Based on the calculated heating time and the scheduled time, a determination can be made regarding whether the temperature of the battery 3 will reach the desired temperature range by the scheduled time. The time for starting temperature control can be calculated so that the temperature of the battery 3 will reach the desired temperature range by the scheduled time.

Further, in the present embodiment, the battery controller 10 predicts the time average current per prescribed unit of time of the minimum charge/discharge current as the charge/discharge current flowing through the internal resistance during execution of heating control. The minimum charge/discharge current is a current that is smaller than the first limit value of the charge/discharge current determined based on at least either constraints of the electric vehicle 100 and constraints of the environment in which the electric vehicle 100 happens to be. The minimum usable charge/discharge current relative to the constraints of the vehicle 100 and the constraints of the environment in which the vehicle 100 happens to be can therefore be used to heat the battery 3 using its own heat production. As a result, effects on other controls of the electric vehicle 100 by the heating control can be minimized.

Further, in the present embodiment, the battery controller 10 predicts the time-average current per prescribed unit of time of the minimum charge/discharge current as the charge/discharge current flowing through the internal resistance during execution of heating control. The minimum charge/discharge current is a current that is smaller than the second limit value of the charge/discharge current determined based on constraints of the electric vehicle 100. The second limit value of the charge/discharge current of the battery 3 determined based on the electric vehicle 100 includes at least one of the following: the charge/discharge current of the battery 3 based on the chargeable/dischargeable power the battery 3 (I_{batt}: corresponds to the "first charge/discharge current" of the present invention), the charge/discharge current based on the power necessary to be produced for the electric vehicle 100 to travel (Iᵣᵤₙ: corresponds to the "second charge/discharge current" of the present invention), and the charge/discharge current of the battery 3 based on the maximum output of the engine 1 (I_{eng}: corresponds to the "third charge/discharge current" of the present invention); the charge/discharge current is predicted as the time-average current per prescribed unit of time of the minimum charge/discharge current; and the minimum charge/discharge current is a current that is smaller than the second limit value of the charge/discharge current determined based on constraints of the electric vehicle. The battery 3 can therefore be heated using its own produced heat by utilizing the minimum usable charge/discharge current with respect to the constraints of the electric vehicle 100.

Further, in the present embodiment, a third limit value of the charge/discharge current of the battery 3 determined based on the environment in which the electric vehicle 100 happens to be is the charge/discharge current of the battery 3 based on the input/output characteristics of the external power supply equipment 17 (I_{ch}: corresponds to the "fourth charge/discharge current" of the present invention) and the charge/discharge current of the battery 3 based on the noise characteristics of the engine 1 (Iₙ: corresponds to the "fifth charge/discharge current" of the present invention). The battery 3 can therefore be heated using its own produced heat by utilizing the minimum usable charge/discharge current with respect to the constraints of the environment in which the electric vehicle 100 happens to be.

Further, in the present embodiment, the desired temperature range is either the temperature range for normal operation or the desired temperature range for high-load operation, and if the scheduled time at which the temperature of the battery 3 will be in the desired temperature range is the scheduled high-load operation start time, the desired temperature range is changed from the temperature range for normal operation to the temperature range for high-load operation prior to the scheduled high-load operation start time. The temperature of the battery 3 can therefore be made higher than the temperature range for normal operation by the scheduled high-load operation start time, making it possible to accommodate the input/output demand power of the battery 3 for high-load operation. Moreover, since the amount of power that the battery 3 can output can be increased, e.g., by adding a battery for high-load operation, high-load operation can be realized with the electric vehicle 100.

Further, by means of the present invention, the battery 3 is a battery that includes an anode active material having an electrode potential that is at least 0.5 V higher than the equilibrium potential in reactions between lithium metal and lithium ions, or a battery provided with a generator element in which an anode active material layer which deposits lithium metal during charging, an electrolyte layer, and a cathode active material layer are sequentially stacked. Limitations on the charge/discharge current of the battery 3 in low-temperature environments can thus be mitigated, allowing repeated execution of charge/discharge control of the battery 3 in low-temperature environments.

Further, in the present embodiment, the battery 3 includes a battery in which an electrode composite layer and an electrolyte layer are stacked, and at least either the electrode composite layer or the electrolyte layer comprises a solid-state electrolyte material. As a result, even if the battery 3 is configured as a lithium secondary ion battery consisting of an electrolyte layer using an organic electrolyte solution, for example, reactions between the organic electrolyte solution and the electrode active material in high-temperature environments can be prevented, making it possible to improve the durability of the battery 3 in high-temperature environments.

It should be noted that the embodiment and variations described above were provided to facilitate understanding of the present invention and do not to limit the present invention. Accordingly, various elements disclosed in the foregoing embodiment should be understood to include all design modifications and equivalents falling within the technical scope of the present invention.

For example, the foregoing embodiment was described using as an example a configuration in which the scheduled travel start time and the scheduled high-load operation start time of the electric vehicle 100 were predicted by the vehicle controller 14, but it is also possible for the battery controller 10 to predict the scheduled times. A detailed description is omitted here, but the battery controller 10 can predict the scheduled times by acquiring the various types of information required for predicting the scheduled times from the vehicle controller 14.

Moreover, for example, the foregoing embodiment was described using as an example the scheduled travel start time and the scheduled high-load operation start time of the vehicle 100 as the scheduled times at which the temperature of the battery 3 will be within the desired temperature range, but the scheduled times at which the temperature of the battery 3 will be within the desired temperature range are not limited to these scheduled times. The vehicle controller 14 may also predict a scheduled time at which charging of the battery 3 by the external power supply equipment 17 will start (hereinafter referred to as the scheduled external charging start time) as a scheduled time at which the temperature of the battery 3 will be within the desired temperature range. For example, the vehicle controller 14 predicts the scheduled external charging start time of the electric vehicle 100 based on the travel route information input from the navigation system 16 and the state of charge of the battery 3. The vehicle controller 14 may also predict the scheduled external charging start time of the electric vehicle 100 as the next charging period of the electric vehicle 100 based on the installation information of the external power supply equipment 17 included in the travel route information and the state of charge of the battery 3. As a result, when the external power supply equipment 17 begins to charge the battery 3, the amount of power that the battery 3 can input or output increases, making it possible to shorten the full charging time, which is the amount of time until the battery 3 becomes fully charged. It should be noted that, as described above, the scheduled external charging start time may also be a scheduled time predicted by the battery controller 10 and not the vehicle controller 14. It is sufficient if the scheduled time at which the temperature of the battery 3 will be within the desired temperature range includes at least one of the following: the scheduled travel start time, the scheduled high-load operation start time, and the scheduled external charging start time.

Moreover, for example, the foregoing embodiment was described using as an example a configuration in which the battery controller 10 executes heating control of the battery 3 when the current temperature of the battery is below the desired temperature range, but the conditions for determining the execution of the heating control are not limited in this way. For example, the battery controller 10 may also predict the temperature of the battery 3 by the aforementioned scheduled times based on the state of charge of the battery 3, etc., and execute heating control of the battery 3 if the temperature of the battery 3 at the scheduled time will be below the desired temperature range for normal operation (or the desired temperature range for high-load operation).

Further, the foregoing embodiment was described using as an example a configuration in which the battery controller 10 calculates as the minimum charge/discharge current of the battery 3 a charge/discharge current of the battery 3 that is smaller than the charge/discharge current of the battery 3 determined based on constraints of the electric vehicle 100 and the charge/discharge current of the battery 3 determined based on constraints of the environment in which the electric vehicle 100 happens to be; however, this is not a limitation. The battery controller 10 may also calculate as the minimum charge/discharge current of the battery 3 a charge/discharge current of the battery 3 that is smaller than at least either of the charge/discharge current of the battery 3 determined based on constraints of the electric vehicle 100 or the charge/discharge current of the battery 3 determined based on constraints of the environment in which the electric vehicle 100 happens to be.

Moreover, for example, in the foregoing embodiment, the charge/discharge current of the battery 3 determined based on the constraints of the electric vehicle 100 may include at least one of the charge/discharge current of the battery 3 based on the amount of power the battery 3 can input or output, the charge/discharge current of the battery 3 based on the power output by the battery 3 necessary for running the electric vehicle 100, or the charge/discharge current of the battery 3 based on the maximum output of the engine 1. Moreover, for example, in the foregoing embodiment, the charge/discharge current of the battery 3 determined based on the constraints of the environment in which the electric vehicle 100 happens to be may include at least either the charge/discharge current of the battery 3 based on the input/output characteristics of the external power supply equipment 17 or the charge/discharge current of the battery 3 based on the noise characteristics of the engine 1.

Moreover, for example, the foregoing embodiment was described using as an example a so-called series hybrid vehicle as the electric vehicle 100, however, the battery temperature control method and battery temperature control device according to the present invention can be applied to so-called series-parallel vehicles and electric automobiles in which the motor 4 is driven solely by the battery 3, without an installed engine 1 for power generation, It should be noted that, when applied to an electric vehicle, the only drive power source for the motor 4 is the battery 3, making it difficult to repeatedly carry out charge/discharge control as the heating control while the electric automobile is traveling, but it is possible to raise the temperature of the battery 3 to the desired temperature range for normal operation in electric vehicles by the scheduled time by executing the heating control prior to the scheduled travel start time or prior to the scheduled external charging start time.

### Explanation of the Reference Numerals

- 100...: Electric vehicle
- 1...: Engine
- 2: Generator
- 3: Battery
- 4: Motor
- 5: Generator inverter
- 6: Motor inverter
- 7: Power delivery module
- 8: Battery junction box
- 9: Charging plug
- 10: Battery controller

## Claims

1. A battery temperature control method in which a controller executes a temperature control of a chargeable/dischargeable battery installed in an electric vehicle, comprising:
acquiring battery information including a temperature of the battery;
predicting a scheduled time at which the temperature of the battery will be within a desired temperature range, or acquiring information pertaining to the scheduled time; and
raising the temperature of the battery to the desired temperature range by the scheduled time by repeating a charge/discharge control of the battery as a heating control of the battery prior to the scheduled time where the temperature of the battery is below the desired temperature range.

2. The battery temperature control method according to claim 1, wherein
the heating control is executed where the current temperature of the battery is below the desired temperature range or where the temperature of the battery will be below the desired temperature range at the scheduled time.

3. The battery temperature control method according to claim 1 or 2, wherein
the scheduled time includes at least one of: a scheduled time at which travel of the electric vehicle will start, a scheduled time at which charging of the battery by external power supply equipment provided outside the electric vehicle will start, and a scheduled time by which output power of the battery will be at least a prescribed amount of power.

4. The battery temperature control method according to any one of claims 1 to 3, wherein
the battery information includes a current temperature of the battery and a heat capacity of the battery,
calculating a heating temperature, which is a temperature difference between a target temperature included in the desired temperature range and the current temperature of the battery,
calculating an internal resistance of the battery based on the current temperature of the battery and the state of charge of the battery,
predicting a charge/discharge current flowing through the internal resistance during execution of the heating control, and
calculating a heating time for the temperature of the battery to reach the target temperature based on the heating temperature, the heat capacity, the internal resistance, and the charge/discharge current.

5. The battery temperature control method according to claim 4, wherein
the charge/discharge current is predicted as a time-average current per prescribed unit of time of a minimum charge/discharge current, and
the minimum charge/discharge current is a current that is smaller than a first limit value of the charge/discharge current determined based on at least one of constraints of the electric vehicle and constraints of environment in which the electric vehicle happens to be.

6. The battery temperature control method according to claim 4, wherein
the charge/discharge current is predicted as a time-average current per prescribed unit of time of a minimum charge/discharge current,
the minimum charge/discharge current is a current that is smaller than a second limit value of the charge/discharge current determined based on constraints of the electric vehicle, and
the second limit value of the charge/discharge current determined based on constraints of the electric vehicle includes at least one of: a first charge/discharge current based on a chargeable/dischargeable power the battery, a second charge/discharge current based on a power output by the battery required for running the electric vehicle, and a third charge/discharge current based on a maximum output of an internal combustion engine installed in the electric vehicle for charging the battery.

7. The battery temperature control method according to claim 5 or 6, wherein
a third limit value of the charge/discharge current determined based on constraints of the environment in which the electric vehicle happens to be includes at least one of a fourth charge/discharge current based on an input/output characteristics of an external power supply equipment provided outside the electrical vehicle, and a fifth charge/discharge current based on noise characteristics of an internal combustion engine installed in the electric vehicle.

8. The battery temperature control method according to any one of claims 1 to 7, wherein
the desired temperature range is either a first temperature range in which degradation of the battery can be minimized, or a second temperature range that is higher than the first temperature range and permits degradation of the battery up to a prescribed level, and
the desired temperature range is changed from the first temperature range to the second temperature range prior to the scheduled time where the scheduled time is a scheduled time by which an output power of the battery will be at least a prescribed amount of power.

9. The battery temperature control method according to any one of claims 1 to 8, wherein
the battery is a battery that includes an anode active material that has an electrode potential which is at least 0.5 V higher than an equilibrium potential in reactions between a lithium metal and lithium ions, or a battery including a power generation element in which an anode active material layer that deposits the lithium metal during charging, an electrolyte layer and a cathode active material layer are sequentially stacked.

10. The battery temperature control method according to any one of claims 1 to 9, wherein
the battery includes a battery in which an electrode composite layer and an electrolyte layer are stacked, and
at least one of an electrode composite layer and an electrolyte layer including a solid-state electrolyte material.

11. A battery temperature control device comprising a controller configured to execute a temperature control of a chargeable/dischargeable battery installed in an electric vehicle,
the controller being configured to:
acquire battery information that includes a temperature of the battery;
predict a scheduled time at which the temperature of the battery will be within a desired temperature range, or acquire information pertaining to the scheduled time; and
raise the temperature of the battery to the desired range by the scheduled time by repeating a charge/discharge control of the battery as a heating control of the battery prior to the scheduled time where the temperature of the battery is below the desired temperature range.
